# FASCICULE DE BREVET EUROPEEN

(11) **EP 2 282 936 B1**
(45) Date de publication et mention de la délivrance du brevet: **05.08.2015**
(21) Numéro de dépôt: 09761877.1
(22) Date de dépôt: 20.05.2009
(51) Int. Cl.: B64D 15/20, B64C 1/06, B64C 3/18

(54) **ELÉMENT DE STRUCTURE D'UN AÉRONEF AYANT UNE PARTIE CREUSE ET INDICATEUR DE FORMATION DE GLACE DANS UNE TELLE PARTIE CREUSE**
FLUGZEUGSTRUKTURELEMENT MIT EINEM HOHLEN TEIL UND INDIKATOR ZUR ANZEIGE DER BILDUNG VON EIS IN EINEM SOLCHEN HOHLEN TEIL
AIRCRAFT STRUCTURAL ELEMENT WITH A HOLLOW PART AND AN INDICATOR INDICATING THE FORMATION OF ICE IN SUCH A HOLLOW PART

(30) Priorité: 20.05.2008 FR 0853265
(43) Date de publication de la demande: 16.02.2011
(73) Titulaire: Airbus Operations, 31060 Toulouse (FR)
(72) Inventeur: DEPEIGE, Alain, F-31170 Tournefeuille (FR)
(74) Mandataire: Santarelli
(86) Numéro de dépôt international: PCT/FR2009/000592
(87) Numéro de publication internationale: WO 2009/150326

(56) Documents cités:
- FR-A- 2 680 871
- FR-A- 2 707 315
- US-A- 5 226 448

## Description

La présente invention concerne un élément de structure d'un aéronef ayant une partie creuse et un indicateur de formation de glace dans une telle partie creuse.

Les surfaces externes d'un aéronef (que ce soit par exemple au niveau du fuselage ou de la voilure) sont généralement formées par une peau relativement peu épaisse, que l'on rigidifie donc classiquement par des éléments de structure, tels que par exemple des cadres et des lisses.

Afin de jouer correctement leur rôle mécanique sans apport excessif de masse, ces éléments de structure ont fréquemment des formes qui définissent une partie creuse au sein de l'élément de structure, comme les lisses en oméga couramment utilisées.

De telles parties creuses peuvent alors former un récipient malencontreux pour les liquides, typiquement l'eau de condensation et de ruissellement, en particulier pour des éléments de structure situés à un point bas de la partie (par exemple du fuselage) concernée.

Cette présence d'eau s'avère problématique lorsque les températures rencontrées entraînent un passage à l'état solide (en pratique la formation de glace) qui peut s'accompagner, du fait des modifications de volume liées au changement d'état à l'intérieur du volume fixe de l'élément structurel, de contraintes mécaniques préjudiciables à la résistance mécanique de l'élément de structure, sans toutefois d'ailleurs qu'une dégradation ne soit visible de l'extérieur.

Ce risque est particulièrement sérieux dans le cas d'éléments de structure en matériau composite où le gel peut conduire à un décollement de l'élément ou à un délaminage.

Un témoin visuel de la présence de givre a déjà été proposé dans le document FR 2 680 871. Ce document vise toutefois la détection du givre de manière générale au niveau de l'avion et n'envisage donc aucunement les conséquences éventuelles du givre sur les éléments de structure.

De plus, un indicateur de formation de glace apte à être monté dans une structure dans un première position et à adopter une seconde position sous l'effet d'efforts exercés par la glace en formation dans une région déterminée d'une partie creuse de l'élément de structure, est connu du document US 5 226 448 ou FR 2 707 315.

Dans ce contexte, l'invention propose un indicateur de formation de glace selon la revendication 1.

Il est ainsi possible, par exemple lors d'une inspection de routine, de détecter facilement les parties ayant subi une inondation et où existe un risque de détérioration des qualités mécaniques de l'élément de structure.

L'indication visuelle est ainsi fournie notamment par le déplacement de l'indicateur du fait de l'augmentation de volume liée au changement d'état, ce qui est une manière particulièrement simple de détecter la formation de glace.

L'indicateur comprend des moyens anti-retour aptes à limiter un mouvement de l'indicateur de la seconde position vers la première position, afin que l'indication visuelle soit relative, le cas échéant, à une présence d'eau à un moment antérieur à celui de l'inspection.

L'indicateur est par exemple en pratique monté à coulissement dans un orifice de l'élément de structure, ainsi qu'éventuellement au moins une patte élastique portant au moins un bossage tel que le diamètre de l'indicateur au niveau du bossage est supérieur au diamètre de l'orifice.

Dans ce contexte, le bossage est par exemple situé à l'intérieur de l'élément de structure (c'est-à-dire en général dans la partie creuse) dans la première position et à l'extérieur de l'élément de structure dans la seconde position.

On réalise ainsi de manière facile à mettre en oeuvre les fonctionnalités envisagées ci-dessus.

L'invention propose également un élement de structure d'un aéronef avec un indicateur de présence d'eau tel que présenté ci-dessus ainsi qu'un aéronef avec un élément de structure tel qu'évoqué ci-dessus.

D'autres caractéristiques et avantages de l'invention apparaîtront mieux à la lumière de la description qui suit, faite en référence aux dessins annexés dans lesquels :
- la figure 1 représente un élément de structure (ici une lisse) susceptible d'être équipé d'un indicateur conformément aux enseignements de l'invention ;
- la figure 2 représente une coupe selon la ligne II-II de la figure 1 ;
- la figure 3 représente la lisse de la figure 1 dans laquelle est montée l'indicateur conformément aux enseignements de l'invention ;
- la figure 4 est une vue en coupe de l'indicateur de la figure 3.

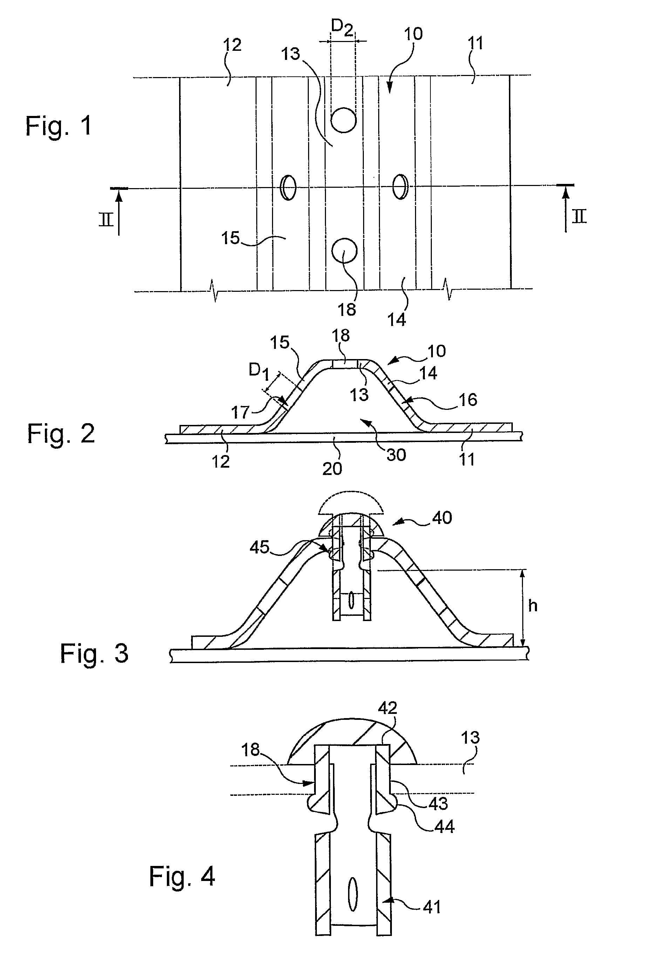

On a représenté sur les figures 1 et 2 une lisse 10 en oméga fixée (par exemple par collage) sur une peau 20 en vue du renforcement de cette dernière.

La lisse s'étend selon une direction générale perpendiculaire au plan de coupe de la figure 2, sur laquelle la forme en oméga est bien visible.

La lisse 10 présente ainsi des pattes 11, 12 essentiellement planes, parallèles et collées à la peau 20. Ces pattes 11, 12 sont situées de part et d'autre d'une région centrale de la lisse 10 formée d'une semelle 13 essentiellement parallèle à la peau 20 mais à distance de celle-ci et qui se prolonge de part et d'autre respectivement en un flanc 14, 15 qui s'étend à l'oblique par rapport à la peau 20 jusqu'à la patte correspondante 11, 12.

La lisse 10 est par exemple réalisée d'une pièce en matériau composite.

Les flancs 14, 15 de la lisse 10 présentent, par exemple à intervalle régulier, des trous de drainage 16, 17 (dont un seul pour chaque flanc est visible sur les figures 1 et 2) de diamètre D₁ ici égal à 10 mm, afin notamment d'évacuer les liquides (principalement l'eau) susceptibles de se retrouver (par exemple par ruissellement ou par condensation) à l'intérieur du volume creux 30 formé entre la lisse 10 et la peau 20 (précisément entre la peau 20 et les flancs 14, 15 et la semelle 13 de la lisse 10).

Il est toutefois possible, malgré la présence des trous de drainage 16, 17, que des liquides s'accumulent dans le volume creux 30 défini entre la lisse 10 et la peau 20, par exemple dans le cas où les trous de drainage 16, 17 sont bouchés, ou également dans des régions du volume creux où les trous 16, 17 ne permettent pas un drainage correct des liquides (telle que par exemple à une extrémité de lisse située en contrebas des trous de drainage 16, 17).

On prévoit de ce fait (en particulier dans les zones sensibles qui viennent d'être mentionnées) un indicateur de formation de glace 40 apte à signaler au moyen d'une indication visuelle la formation de glace dans une région déterminée du volume creux 30 définie par la peau 20 et la lisse 10.

La figure 3 montre un tel indicateur 40 monté à coulissement dans un orifice (ici de diamètre D₂ égal à 6 mm) de la semelle 13 de la lisse 10 et muni d'éléments anti-retour (ici des cliquets anti-retour 45) de manière à rester dans une position "*sortie*" (visible en pointillés sur la figure 3) suite à un mouvement de l'indicateur 40 vers l'extérieur du fait de la formation de glace dans la partie creuse.

Comme visible en figure 4, l'indicateur 40 est par exemple formé d'une partie générale cylindrique 41 de diamètre extérieur légèrement inférieur au diamètre D₂ des orifices 18 formés dans la semelle de manière à pouvoir coulisser comme déjà indiqué dans ces orifices 18

L'indicateur comprend également une tête 42, par exemple sertie sur la partie cylindrique 41. La tête 42 est de diamètre supérieur à celui de l'orifice 18 précité afin d'arrêter le coulissement de l'indicateur 40 (vers le bas sur les figures).

L'indicateur 40 comprend également des pattes élastiques 43 situées dans le prolongement de la partie cylindrique 41 au repos et terminées chacune par un bossage 44, de manière à former au niveau des bossages 44 situés sur les pattes élastiques 43 un diamètre supérieur au diamètre D₂ de l'orifice 18 précité.

Les indicateurs 40 (plusieurs indicateurs pouvant être disposés chacun dans un orifice 18 d'une zone sensible mentionnée ci-dessus) sont insérés dans leur orifice 18 en rétractant les bossages 44 vers l'intérieur de la partie cylindrique 41 par action sur les pattes élastiques 43 (par exemple au moyen d'un outillage adapté) jusqu'à ce que la tête 42 de l'indicateur vienne au contact de la semelle 13 de la lisse 10, où l'indicateur 40 a une position dite *"rentrée"*, où les bossages 44 arrêtent le coulissement de l'indicateur 40 (vers le haut sur les figures).

Tant que le volume défini entre la peau 20 et la lisse 10 n'est pas rempli de glace (et que la présence d'eau ou de glace n'est donc pas préjudiciable aux qualités mécaniques de l'élément de structure), l'indicateur reste dans cette position rentrée grâce à la rigidité relative des pattes élastiques 43 et à la présence des bossages 44 qui immobilisent l'indicateur 40 par rapport à la semelle 13.

En revanche, en cas de formation et de présence importante de glace dans le volume défini par la lisse 10 et la peau 20, ici si la hauteur de glace est supérieure à la hauteur h visible sur la figure 3, l'indicateur est poussé vers l'extérieur du volume 30, en particulier lors de la formation de glace du fait de l'augmentation du volume associée à ce changement d'état, si bien que les pattes élastiques 43 fléchissent vers l'intérieur jusqu'à ce que les bossages n'empêchent plus la remontée de l'indicateur 40 vers l'extérieur du volume (vers le haut sur la figure 3) et l'indicateur 40 atteint ainsi la position représentée en trait pointillé sur la figure 3. Les bossages 44 ont de préférence une forme adaptée à faciliter cette remontée de l'indicateur 40.

Une fois l'indicateur 40 déplacé en position sortie, les bossages 44 empêchent le retour en position rentrée même si la glace fond et l'eau est évacuée (par exemple par évaporation) du volume 30, ce qui permet de détecter la présence antérieure de glace (et le risque de fragilisation de l'élément de structure associé) même lors d'une inspection ultérieure où la glace n'est plus présente.

On peut ainsi facilement lors d'une inspection de routine détecter les zones de la structure pour lesquelles un givrage a eu lieu et engager dans ces zones une détermination plus précise de la présence effective d'un décollement ou d'un délaminage, par exemple à l'aide des moyens de contrôle non destructifs adaptés.

L'exemple décrit ci-dessus n'est qu'un mode possible de mise en oeuvre de l'invention. Il est par exemple envisageable de détecter la formation de glace dans la partie creuse par des moyens électriques ou électroniques (par exemple en déclenchant un interrupteur du fait du déplacement de l'indicateur décrit ci-dessus ou au moyen de capteurs des efforts exercés par la glace en formation) et de générer une indication visuelle de cette détection par exemple au moyen d'un voyant connecté à ces moyens de détection électriques ou électroniques.

## Revendications

1. Indicateur (40) de formation de glace apte à être monté dans un élément de structure (10) d'un aéronef dans une première position et à adopter une seconde position sous l'effet d'efforts exercés par la glace en formation dans une région déterminée d'une partie creuse (30) de l'élément de structure (10), **caractérisé par** des moyens anti-retour (45) aptes à limiter un mouvement de l'indicateur (40) de la seconde position vers la première position.

2. Indicateur selon la revendication 1, comprenant au moins une patte élastique (43) portant au moins un bossage (44) apte à être situé à l'intérieur de l'élément de structure (10) dans la première position et à l'extérieur de l'élément de structure (10) dans la seconde position.

3. Elément de structure (10) d'un aéronef comportant une partie creuse (30), **caractérisé par** un indicateur conforme à la revendication 1 ou 2, ledit indicateur étant apte à fournir une indication visuelle en cas de formation de glace dans une région déterminée de la partie creuse (30).

4. Elément de structure selon la revendication 3, dans lequel l'indicateur (40) est monté à coulissement dans un orifice (18) de l'élément de structure (10).

5. Elément de structure selon la revendication 4, dans lequel l'indicateur comprend au moins une patte élastique (43) portant au moins un bossage (44) tel que le diamètre de l'indicateur (40) au niveau du bossage (44) est supérieur au diamètre de l'orifice (18).

6. Elément de structure selon la revendication 5, dans lequel le bossage (44) est situé à l'intérieur de l'élément de structure (10) dans la première position et à l'extérieur de l'élément de structure (10) dans la seconde position.

7. Elément de structure selon l'une des revendications 3 à 6, l'élément de structure étant une lisse.

8. Aéronef **caractérisé en ce qu'**il comprend un élément de structure selon l'une des revendications 3 à 7.

## Patentansprüche

1. Anzeige (40) für Eisbildung, die in einem Strukturelement (10) eines Luftfahrzeugs in einer ersten Position angebracht sein kann und unter Wirkung von durch das Eis bei der Bildung in einem bestimmten Bereich eines hohlen Teils (30) des Strukturelements (10) erzeugten Kräften eine zweite Position einnehmen kann, **gekennzeichnet durch** Rückkehrblockiermittel (45), die eine Bewegung der Anzeige (40) aus der zweiten Position in die erste Position begrenzen können.

2. Anzeige nach Anspruch 1, die mindestens eine elastische Nase (43) umfasst, die mindestens einen Buckel (44) trägt, der sich in der ersten Position im Inneren des Strukturelements (10) und in der zweiten Position außerhalb des Strukturelements (10) befinden kann.

3. Strukturelement (10) eines Luftfahrzeugs, das einen hohlen Teil (30) aufweist, **gekennzeichnet durch** eine Anzeige nach Anspruch 1 oder 2, die eine Sichtanzeige bei Bildung von Eis in einem bestimmten Bereich des hohlen Teils (30) liefern kann.

4. Strukturelement nach Anspruch 3, wobei die Anzeige (40) verschiebbar in einer Öffnung (18) des Strukturelements (10) angebracht ist.

5. Strukturelement nach Anspruch 4, wobei die Anzeige mindestens eine elastische Nase (43) umfasst, die mindestens einen Buckel (44) trägt, so dass der Durchmesser der Anzeige (40) an dem Buckel (44) größer ist als der Durchmesser der Öffnung (18).

6. Strukturelement nach Anspruch 5, wobei sich der Buckel (44) in der ersten Position im Inneren des Strukturelements (10) und in der zweiten Position außerhalb des Strukturelements (10) befindet.

7. Strukturelement nach einem der Ansprüche 3 bis 6, wobei das Strukturelement ein Stringer ist.

8. Luftfahrzeug, **dadurch gekennzeichnet, dass** es ein Strukturelement nach einem der Ansprüche 3 bis 7 umfasst.

## Claims

1. Indicator (40) of ice formation able to be installed in a structural element (10) of an aircraft in a first position and to adopt a second position under the effect of forces exerted by the ice forming in a determined region of a hollow part (30) of the structural element (10), **characterised by** non-return means (45) able to limit a movement of the indicator (40) from the second position towards the first position.

2. Indicator according to claim 1, comprising at least one elastic tab (43) bearing at least one boss (44) able to be located inside the structural element (10) in the first position and outside the structural element (10) in the second position.

3. Structural element (10) of an aircraft comprising a hollow part (30), **characterised by** an indicator according to claim 1 or 2, the said indicator being able to provide a visual indication if ice forms in a determined region of the hollow part (30).

4. Structural element according to claim 3, in which the indicator (40) is installed for sliding in an aperture (18) of the structural element (10).

5. Structural element according to claim 4, in which the indicator comprises at least one elastic tab (43) bearing at least one boss (44) such that the diameter of the indicator (40) at the boss (44) is greater than the diameter of the aperture (18).

6. Structural element according to claim 5, in which the boss (44) is located inside the structural element (10) in the first position and outside the structural element (10) in the second position.

7. Structural element according to one of claims 3 to 6, the structural element being a stringer.

8. Aircraft, **characterized in that** it comprises a structural element according to one of claims 3 to 7.
